(19) **Europäisches Patentamt**
**European Patent Office**
**Office européen des brevets**

(11) Veröffentlichungsnummer: **0 326 562**
**B1**

(12) **EUROPÄISCHE PATENTSCHRIFT**

(45) Veröffentlichungstag der Patentschrift: **20.06.90**

(51) Int. Cl.⁵: **B 62 D 6/02**

(21) Anmeldenummer: **87906181.0**

(22) Anmeldetag: **16.09.87**

(86) Internationale Anmeldenummer:
**PCT/EP87/00524**

(87) Internationale Veröffentlichungsnummer:
**WO 88/01959 24.03.88 Gazette 88/07**

(54) **DREHSCHIEBERVENTIL FÜR HYDRAULISCHE HILFSKRAFTLENKUNGEN.**

(30) Priorität: **19.09.86 PCt/ep86/00543**

(43) Veröffentlichungstag der Anmeldung:
**09.08.89 Patentblatt 89/32**

(45) Bekanntmachung des Hinweises auf die
Patenterteilung:
**20.06.90 Patentblatt 90/25**

(84) Benannte Vertragsstaaten:
**DE FR GB IT**

(56) Entgegenhaltungen:
**EP-A-0 159 687**
**EP-A-0 171 247**
**DE-A-3 516 219**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **ELSER, Dieter
Jagerstrasse 10
D-7087 Essingen (DE)**
Erfinder: **HETZEL, Helmut
Lerchenstrasse 45
D-7070 Schwäbisch Gmünd (DE)**
Erfinder: **KOGEL, Walter
Am Sonnenweg 2
D-7083 Abtsgmünd (DE)**

(74) Vertreter: **Raue, Reimund
Zahnradfabrik Friedrichshafen AG Löwentaler
Strasse 100 Postfach 2520
D-7990 Friedrichshafen 1 (DE)**

EP 0 326 562 B1

## Beschreibung

Die Erfindung betrifft ein Drehschieberventil für hydraulische Hilfskraftlenkungen von Kraftfahrzeugen nach dem Oberbegriff von Anspruch 1.

Hilfskraftlenkungen sind im allgemeinen so ausgeführt, daß die Ventilkennlinie (Arbeitsdruck — Betätigungskraft-Kennlinie) in einem verhältnismäßig großen Drehwinkelbereich des Drehschiebers einen flachen, allmählichen Anstieg aufweist, um dann mit weiter wachsender Betätigungskraft steil auf einen Höchstwert anzusteigen. Der Fahrer muß also bis zum Erreichen einer höheren Kraftverstärkung, beispielsweise beim Einparken und Rangieren, das Lenkhandrad um einen verhältnismäßig großen Drehwinkel verdrehen. Innerhalb dieses Drehwinkels verdrehen sich die beiden durch den Drehstab elastisch miteinander verbundenen Drehschieber-Bauteile gegeneinander. Je nach Querschnitt und Länge des Drehstabes muß der Fahrer eine mehr oder weniger hohe Betätigungskraft aufbringen, bis das Drehschieberventil die gewünschte Kraftverstärkung ansteuert. Eine solche Ventilkennlinie mit zunächst flachem Anstieg über dem Drehwinkel ermöglicht bei höheren Geschwindigkeiten sehr gute Geradeausfahrt-Eigenschaften, da der Hilfskraftanteil klein bleibt und die Rückmeldung innerhalb des elastischen Bereiches des Drehstabes ein gutes Lenkgefühl zuläßt. Die auf ein exaktes Lenkverhalten bei hohen Geschwindigkeiten abgestimmte Kennliniencharakteristik hat jedoch den Nachteil, daß die Betätigungskraft im Langsamfahrbereich relativ hoch liegt.

Ein Drehschieberventil, welches die Drucksteuerung so vornimmt, daß sich die gegensätzlichen Forderungen einer niedrigen Betätigungskraft im Langsamfahrbereich und einer hohen Betätigungskraft bei schneller Fahrt erfüllen lassen, ist bereits aus der EP 01 71 247 A2 bekannt. Dieses bekannte Drehschieberventil ist Bauteil einer Zahnstangenlenkung, in welcher der mit der Lenkspindel verbundene Drehschieber über den Drehstab mit dem in die Zahnstange eingreifenden Ritzel verbunden ist. Die den Drehschieber umgebende Ventilbuchse ist in Drehrichtung mit einem Steuerspiel gleichfalls mit dem Ritzel gekoppelt, jedoch axial verschieblich auf dem Drehschieber geführt. Die Ventilbüchse stützt sich auf ihrer einen Stirnseite gegen eine Feder im Gehäuse ab, während an der anderen Stirnseite ein Druckraum anschließt. Dieser Druckraum liegt zwischen den radialen Rücklaufbohrungen im Drehschieber und dem zu einem Behälter führenden Rücklaufanschluß. In den Rücklaufanschluß ist eine elektromagnetisch betätigte Verstelldrossel eingebaut, die den Rücklaufquerschnitt in Abhängigkeit von der Fahrgeschwindigkeit steuert. Die Verstelldrossel ist bei schneller Fahrt weit geöffnet, so daß das Öl ungehindert zum Rücklaufanschluß abströmen kann. Die Ventilbuchse verharrt daher auf dem Drehschieber in ihrer durch die Feder bestimmten Ausgangslage, so daß die Steuernuten und die zugehörigen Steuerkanten des Drehschieberventils auf ihrer gesamten Länge zur Druckanregelung verfügbar sind. Dies bedeutet, einen Kennlinienverlauf mit einem allmählichen Druckanstieg über einen verhältnismäßig großen Drehwinkelbereich und erst gegen Ende der Relativdrehung der beiden Drehschieberteile zueinander, den weiteren steilen Druckanstieg.

Bei langsamer Fahrt (Einparken) ist der Durchtrittsquerschnitt an der Verstelldrossel stark verengt. Dadurch bildet sich in dem Druckraum der Ventilbuchse ein Differenzdruck aus, der diese gegen die Federkraft in Endstellung verschiebt. Die wirksame Steuerkantenlänge des Drehschieberventils ist dadurch verkürzt, so daß sich auch die ursprüngliche Charakteristik des Drehschieberventils verändert. Der zum Anregeln des Druckes benötigte Verdrehwinkel zwischen den beiden Drehschieberbauteilen ist kleiner, da der Druckaufbau im aktiven Druckraum des Arbeitszylinders sich viel schneller vollzieht. Dies ist eine Folge des verkleinerten Abregelquerschnittes. Da demzufolge der Drehstab nur um einen kleinen Winkelbetrag verdreht werden muß, ist auch die Betätigungskraft am Lenkhandrad entsprechend kleiner. Die Lenkkraft-Kennlinie hat nunmehr einen sehr steilen Verlauf über den Drehwinkel. Zwischen den beiden beschriebenen Stellungen der Ventilbuchse, nämlich der Ausgangsstellung und der Endstellung, ist in Abhängigkeit des variablen Differenzdruckes jede beliebige Zwischenstellung der Ventilbuchse möglich. Auf diese Weise läßt sich die Ventilcharakteristik dem jeweiligen Fahrzustand anpassen. Zur besseren Kennlinienabstimmung sind die Steuerkanten des bekannten Drehschiebers mit kurzen Taschen versehen, die in lange Steuerschlitze übergehen. Die Taschen haben dabei eine größere Umfangslänge als die Schlitze.

Diese bekannte Ölrücklaufsteuerung zum Verändern der Ventilkennlinie ist nur für Lenkeinrichtungen mit einer getrennten Ventilbuchse geeignet. In Lenkgetrieben, in welchen die Ventilbuchse aus baulichen Gründen mit einem weiteren Getriebeteil vereinigt ist, läßt sich die beschriebene Rücklaufsteuerung nicht verwenden. Infolge ihrer großen Dichtungslänge am Außenumfang arbeiten derartige axialverschiebliche Ventilbuchsen bei der Druckbeaufschlagung mit Hysterese.

Der Erfindung liegt daher die Aufgabe zugrunde, eine allgemein anwendbare Rücklaufsteuerung zu finden. Die Rücklaufsteuerung soll also sowohl in Verbindung mit gekoppelten Ventilbuchsen als auch bei solchen in getrennter Anordnung verwendbar sein.

Diese Aufgabe ist durch das in Anspruch 1 gekennzeichnete Drehschieberventil gelöst. Vorteilhafte Ausgestaltungen sind in den Unteransprüchen angegeben.

Nach dem Hauptmerkmal der Erfindung sind die Rücklaufbohrungen im Drehschieber für jede Drehrichtung getrennt in Längsrichtung hintereinander angeordnet, so daß jeweils zwei in Umfangsrichtung nebeneinander liegende Bohrungsreihen entstehen. Jede Bohrungsreihe ist einer mit dem Stellmotor verbundenen Steuernut in der Ventilbuchse zugeordnet. Ein in einer konzentrischen Bohrung des Drehschiebers geführter Steuerkolben steht zum Verändern des Rücklaufquerschnitts über ein auf dem Drehstab abgestütztes Rohr mit einer Verstelleinrichtung in Verbindung, die den Steuerkolben in Abhängigkeit von mindestens einer Einflußgröße verstellt. Je nach Stellung des gegen Federkraft verschiebbaren Steuerkolbens steht ein größerer oder kleinerer Rücklaufsteuerquerschnitt zur Verfügung, so daß man unterschiedliche Betätigungskräfte am Lenkhandrad erhält. Es lassen sich somit auch mit einem Drehschieberventil mit einer axial unverschieblichen Ventilbuchse bei allen Fahrgeschwindigkeiten optimal abgestimmte Betätigungskräfte verwirklichen. Der metallisch im Drehschieber abdichtende Steuerkolben bietet hierbei den Vorteil einer hysteresearmen Funktion.

In einer Ausführungsform ist als Verstelleinrichtung ein Elektromagnet vorgesehen. Dieser ist an einem Gehäusedeckel fluchtend zum Drehstab befestigt und wirkt über das durch eine Gewindespindel geführte Rohr auf den Steuerkolben ein.

In einer anderen Ausführungsform ist als Verstelleinrichtung für den Steuerkolben ein mit dem Drehstab fluchtender Kolben in einen Gehäusedeckel eingesetzt. Eine beaufschlagbare Fläche dieses Kolbens hat mit einem das Rücklauföl führenden Innenraum einer Gewindespindel Verbindung, wobei in einen Rücklaufkanal hinter der beaufschlagbaren Fläche ein elektromagnetisches Drosselventil eingebaut ist. Das Drosselventil staut das Rücklauföl mehr oder weniger auf, so daß sich aus dem veränderlichen Druck ergebende Kolbenbewegung über das Rohr auf den Steuerkolben überträgt.

Beide Verstelleinrichtungen bieten die Möglichkeit, die Rücklaufsteuereinrichtung über ein elektronisches Steuergerät zu betätigen, welches verschiedene Einflußfaktoren über den jeweiligen Fahrzustand, z. B. Geschwindigkeit, Querbeschleunigung und Zuladung, verarbeiten und in Steuersignale umsetzen kann. Die gesamte Rücklaufsteuereinrichtung läßt sich bis auf den Elektromagnet bzw. den im Gehäusedeckel sitzenden Kolben innerhalb der Umrisse eines handelsüblichen Lenkgetriebes unterbringen, so daß nur wenig zusätzlicher Bauraum beansprucht wird.

Nach einem Merkmal sind in die Außenflächen des Steuerkolbens etwa im Abstand der im Drehschieber vorgesehenen radialen Rücklaufbohrungen Ringnuten eingearbeitet, die mit einer an einen Behälter angeschlossenen Bohrung des Steuerkolbens verbunden sind. Diese Ringnuten steuern den Öldurchgang von den Rücklaufbohrungen zum Behälter. Anschließend an zwei nebeneinanderliegende Bohrungsreihen liegt mittig zu diesen eine weitere, einer langen Ringnut gegenüberliegende Rücklaufbohrung, deren Querschnitt als Restquerschnitt stets geöffnet ist. Auf diese Weise erhält man einen in einem großen Bereich veränderbaren Rücklaufquerschnitt.

Nach einem weiteren Merkmal sind die Rücklaufbohrungen vorteilhaft von durch Prägen hergestellten Fenstern umgeben. Die Fenster haben unterschiedliche Breite und Umfangslänge, wobei ein Teil der Fenster eine schräge Außenkontur hat. Die so gestalteten Fenster haben die Aufgabe, die Mengenverteilung auf den jeweils noch offenen Bohrungsquerschnitt so vorzunehmen, daß sich die gewünschte Kennlinienveränderung einstellt. Die Fenster sorgen außerdem dafür, daß der Druck über einen verhältnismäßig langen Strömungsweg abgebaut wird. Die Bohrungsreihen mit den zugehörigen Fenstern sind durch einen längs verlaufenden Steg hydraulisch voneinander getrennt. Durch diese Maßnahme ist gesichert, daß in jeder Drehrichtung von den jeweils zwei nebeneinanderliegenden Bohrungsreihen immer nur eine die exakte Druckanregelung übernimmt, d. h., daß BypassStröme vermieden werden. Weiter ist von Bedeutung, daß die mittig angeordnete, nicht steuerbare Rücklaufbohrung und ihr zugehöriges Fenster in beiden Drehrichtungen wirksam sind.

In der Grundstellung des Steuerkolbens, also bei nicht erregtem Elektromagnet, sind die Rücklaufbohrungen durch die auf den Steuerkolben drückende Feder vollständig geöffnet. Dies hat den Vorteil, daß bei einem eventuellen Stromausfall die für ein gutes Lenkgefühl verantwortliche verhältnismäßig hohe Betätigungskraft aufzubringen ist. Bei den überwiegend gefahrenen mittleren und höheren Geschwindigkeiten bleibt deshalb ein guter Straßenkontakt erhalten.

Dadurch, daß das die Axialbewegung auf den Steuerkolben übertragende Rohr an beiden Enden im Bereich der Drehstabverstiftung sich gegenüberliegende Lappen aufweist, läßt sich das Rohr auf dem Drehstab axial verschieben.

Weitere Einzelheiten der Erfindung sind in der Zeichnung anhand eines Ausführungsbeispieles näher erläutert. Es zeigen

Fig. 1 einen Längsschnitt durch eine Blocklenkung mit eingebautem Arbeitszylinder;

Fig. 2 eine Ausschnittvergrößerung des Drehschieberventils entsprechend der strichpunktierten Umrandung II in Fig. 1;

Fig. 3 einen vergrößerten Schnitt nach der Linie III-III in Fig. 1;

Fig. 4 einen vergrößerten Schnitt nach der Linie IV-IV in Fig. 1;

Fig. 5 einen vergrößerten Teillängsschnitt des Drehschieberventils bei weggelassenem Gehäuse;

Fig. 6 einen Längsschnitt nach der Linie VI-VI der Fig. 5 mit dem Steuerkolben in der Grundstellung für geringste Betätigungskraft;

Fig. 7 einen Querschnitt durch das Drehschieberventil in Neutralstellung nach der Linie VII-VII in Fig. 5;

Fig. 8 eine teilweise Abwicklung des Drehschiebers, gesehen in Richtung des Pfeiles VIII der Fig. 7;

Fig. 9 einen Querschnitt entsprechend Fig. 7, jedoch in Lenkstellung;

Fig. 10 eine teilweise Abwicklung des Drehschiebers, gesehen in Richtung des Pfeiles X der Fig. 9;

Fig. 11 einen Längsschnitt nach Fig. 6, jedoch in der Endstellung des Steuerkolbens für höchste Betätigungskraft;

Fig. 12 ein Arbeitsdruck-Handkraft-Kennlinienfeld und Fig. 13 einen Teilschnitt durch eine weitere Ausführungsform.

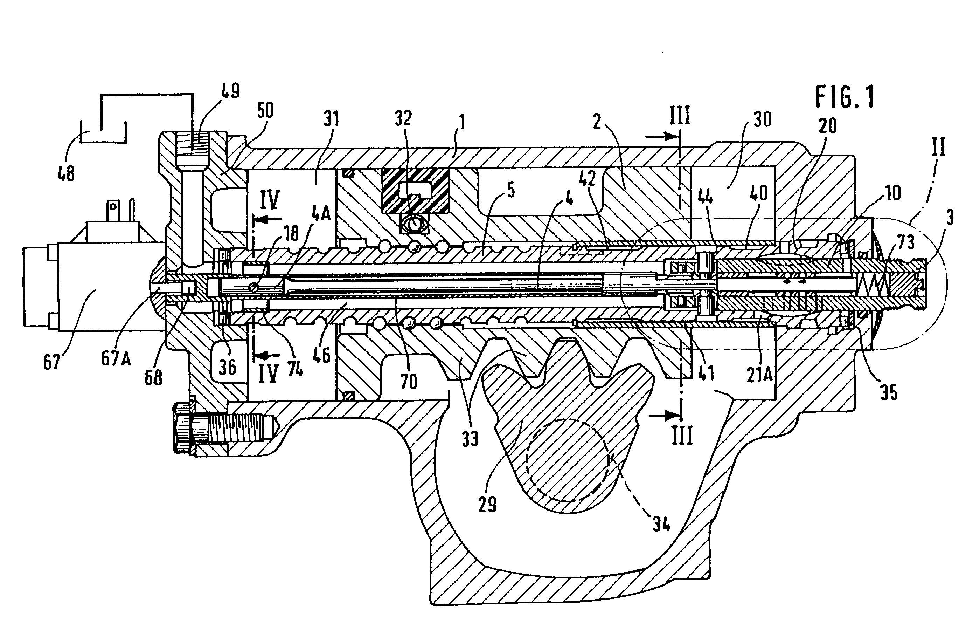

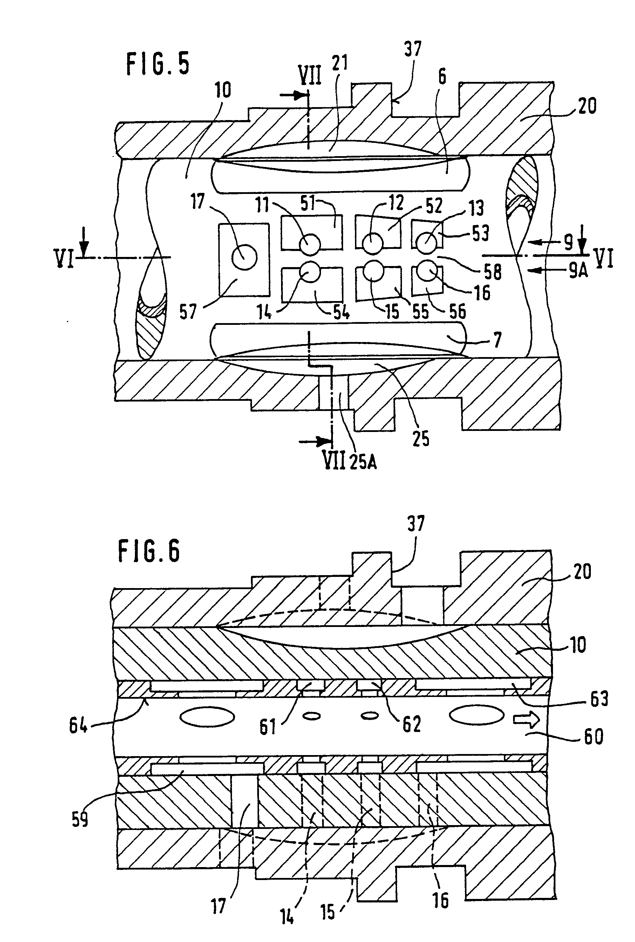

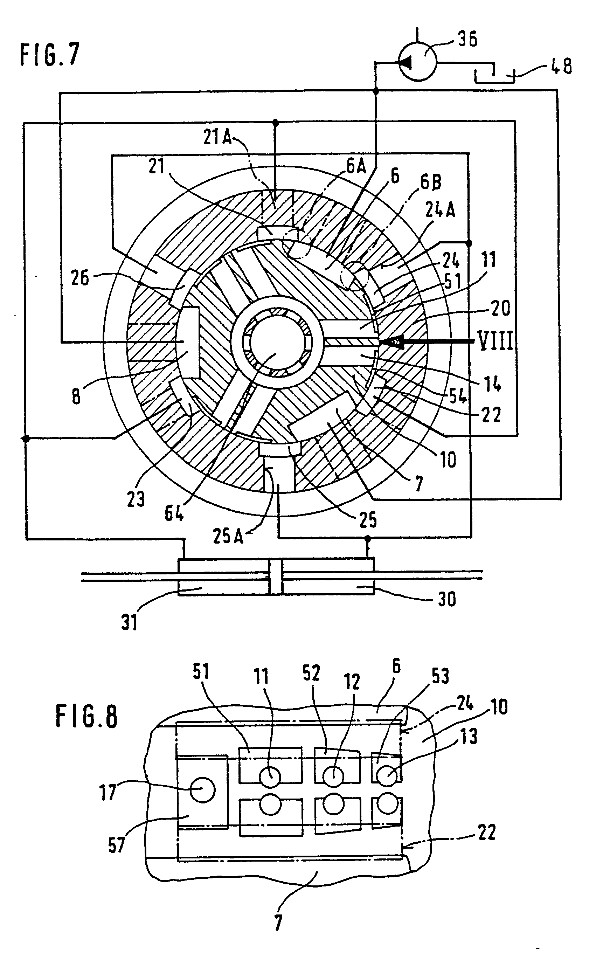

Die Fig. 1 zeigt ein sogenanntes Blocklenkgetriebe mit einem in ein Getriebegehäuse 1 eingebauten Arbeitskolben 2. Eine Lenkspindel 3 ist über einen Drehstab 4 an eine Gewindespindel 5 angeschlossen. Wie am besten aus Fig. 7 ersichtlich, enthält die Lenkspindel 3 in gleichen Winkelabständen voneinander entfernt z. B. drei axiale Zulaufsteuernuten 6, 7, 8, die zu einem Drehschieber 10 gehören. Zwischen diesen Steuernuten 6 bis 8 liegen jeweils zwei Reihen 9 bzw. 9A in Längsrichtung hintereinanderliegender Rücklaufbohrungen, in Fig. 5 sind dies die Rücklaufbohrungen 11 bis 13 bzw. 14 bis 16. Mittig zu diesen beiden Reihen liegt eine weitere Rücklaufbohrung 17 mit größerem Durchmesser. Die genauere Gestaltung dieser Bohrungsanordnung und ihre Funktion wird später eingehend erläutert.

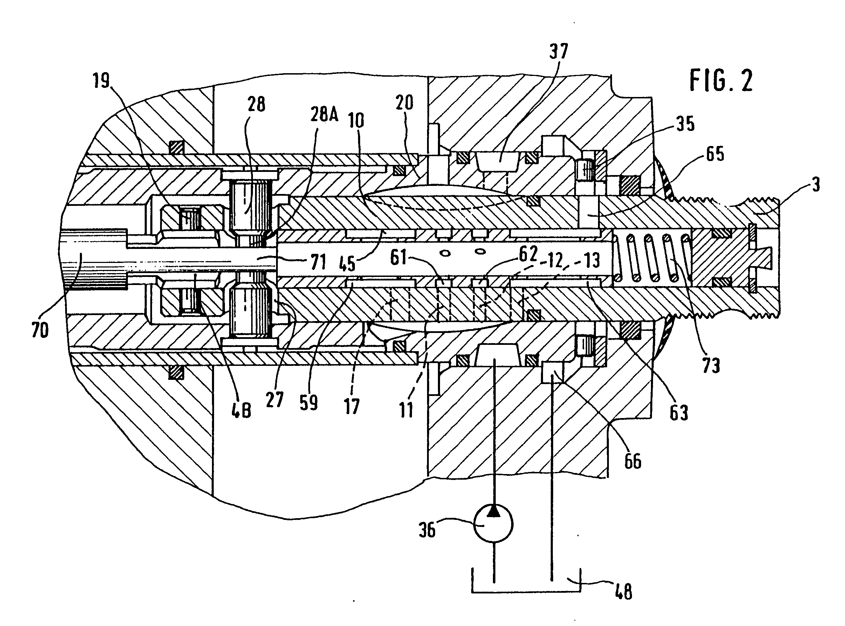

Der Drehschieber 10 arbeitet mit einer mit der Gewindespindel 5 einstückig hergestellten Ventilbuchse 20 mit axialen Steuernuten 21, 22, 23 bzw. 24, 25, 26 (Fig. 7) zusamme. Der Drehschieber 10 und die Ventilbuchse 20 bilden die Bauteile eines in solchen Hilfskraftlenkungen üblichen Drehschieberventils. Ein in der Gewindespindel 5 fester und in Drehrichtung mit Spiel durch eine Bohrung 27 der Lenkspindel 3 hindurchgeführter Querbolzen 28 legt einen bestimmten Steuerweg zwischen der Lenkspindel 3 und der Gewindespindel 5 fest (Fig. 2). Innerhalb dieses Steuerspiels steuert das Drehschieberventil 10, 20 je nach Drehrichtung in einen Druckraum 30 oder 31 des Arbeitskolbens an. Der Querbolzen 28 hat eine Einschnürung 28A, auf die später nochmals einzugehen ist. Der Arbeitskolben 2 greift über eine endlose Kugelkette 32 in die Gewindespindel 5 ein und steht über eine Verzahnung 33 mit einem auf einer Lenkwelle 34 angeordneten Lenksegment 29 in Eingriff. Axiallager 35 und 36 dienen zur Aufnahme der auf die Gewindespindel 5 einwirkenden Axialkräfte. Eine von einem Fahrzeugmotor angetriebene Pumpe 36 kann über eine Ringnut 37 der Ventilbuchse 20 (Fig. 2) und die Zulaufsteuernuten 6, 7, 8 im Drehschieber 10 an die Steuernuten 21, 22, 23 bzw. 24, 25, 26 (Fig. 7) der Ventilbuchse 20 angeschlossen werden. Der Einfachheit halber sind lediglich den Öldurchtritt steuernde Steuerkanten 6A und 6B der Zulaufsteuernut 6 bezeichnet. Die Steuernuten 21, 22, 23 stehen über zugehörige Radialbohrungen, z. B. 21A, mit dem Druckraum 31 und die Steuernuten 24, 25, 26 über entsprechende Radialbohrungen, z. B. 25A, mit dem Druckraum 30 in Verbindung. Aus Fig. 1 ist zu ersehen, wie die Verbindung zum Druckraum 31 im Lenkgetriebe verläuft: Der Ölweg führt von der Radialbohrung 21A in zwischen einem Rohr 44 und der Gewindespindel 5 vorgesehene Ringspalten 40, 41, 42 und schließlich über das Spindelgewinde in diesen Druckraum 31.

Eine Bohrung 45 in der Lenkspindel 3 ist über die Bohrung 27 des Querbolzens 28 mit einem Innenraum 46 der Gewindespindel 5 verbunden. Dieser Innenraum 46 ist über einen Auslaßanschluß 49 in einen Deckel 50 zu einem Behälter 48 entlastet.

Jede Rücklaufbohrung 11 bis 17 des aus Fig. 5 ersichtlichen Systems hat ein sogenanntes Fenster 51 bis 57 mit einem sehr flachen Drosselquerschnitt für die Druckanregelung. Diese Fenster sind unterschiedlich breit und haben durch eine schräge Außenkontur auch eine unterschiedlich wirksame Länge. Das Fenster 57 der Rücklaufbohrung 17 für den unveränderlichen Restquerschnitt hat die kürzeste Umfangslänge. Die Rücklaufbohrungen 11, 12, 13 bzw. 14, 15, 16 und die zugehörigen Fenster sind durch einen Steg 58 voneinander hydraulisch getrennt. Das System der Rücklaufbohrungen wiederholt sich bei dem gewählten Ausführungsbeispiel am Drehschieber 10 insgesamt dreimal. Wegen der leichteren Verständlichkeit ist die Erfindung jedoch nur an einem Bohrungssystem näher erläutert und mit Bezugsziffern versehen.

Nach Fig. 6 ist in der Bohrung 45 der Lenkspindel 3 ein axial beweglicher Steuerkolben 60 mit zwei kurzen Ringnuten 61, 62 und zwei langen Ringnuten 59, 63 geführt. Diese Ringnuten 59, 61, 62 und 63 stehen über eine Bohrung 64 des Steuerkolbens 60, die Bohrung 45 und über den Innenraum 46 der Gewindespindel 5 mit dem Behälter 48 in Verbindung. Die lange Ringnut 63 hat außerdem noch über einen weiteren Rücklaufweg, nämlich eine Radialbohrung 65 (Fig. 2), das Axiallager 35 und über eine Gehäuserücklaufnut 66 mit dem Behälter 48 Verbindung. Die Ringnuten 61, 62 und 63 wirken je nach Stellung des Steuerschiebers 60 mit den Rücklaufbohrungen 11, 12, 13 bzw. 14, 15, 16 zusammen. Die Rücklaufbohrung 17 hat in jeder Stellung des Steuerkolbens 60 mit der langen Ringnut 59 Verbindung, so daß ein ständig geöffneter Restquerschnitt vorhanden ist.

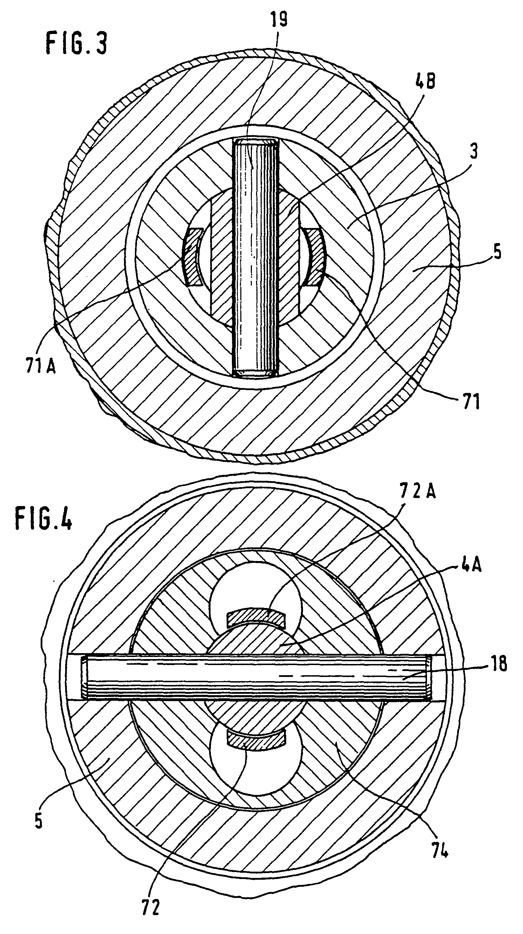

Nach Fig. 1 hält eine Feder 73 den Steuerkolben 60 in der gezeichneten Grundstellung. Als Verstelleinrichtung ist ein an einem Deckel 50 befestigter Elektromagnet 67 mit einem Stößel 67A vorgesehen, der in eine Hülse 68 eingreift. Die Hülse 68 liegt stirnseitig an einem den Drehstab 4 umgebenden Rohr 70 an. Der Drehstab 4 ist an einem verdickten Ende 4A durch einen Stift 18 mit der Gewindespindel 5 und an seinem anderen abgeflachten Ende 4B durch einen weiteren Stift 19 (Fig. 2) vorspannungsfrei mit der Lenkspindel 3 verbunden. Fig. 3 und 4 zeigen, daß das Rohr 70 zwei sich gegenüberliegende, gabelförmige Lappen 71 und 71A aufweist. Diese Lappen sind so an dem abgeflachten Ende 4B des Drehstabes 4 und an der Einschnürung 28A des Bolzens 28 vorbeigeführt, daß sie an dem Steuerkolben 60 zur Anlage kommen. Aus Fig. 1 und 4 ist ersichtlich, daß das Rohr 70 auf seiner dem Elektromagnet 67 zugewandten Seite gleichfalls Lappen 72 und 72A besitzt, die durch eine Buchse 74 hindurch seitlich am Stift 18 vorbeiführen. Durch diese an beiden Enden des Drehstabes 4 vorgesehenen Lappen 71, 71A bzw. 72, 72A kann sich das Rohr 44 beim Betätigen des Elektromagnets 67 axial verschieben und auf den Steuerkolben 60 einwirken.

Das Drehschieberventil arbeitet wie folgt: In Fig. 7 und 8 ist das Drehschieberventil in seiner Neutralstellung gezeichnet, d. h., dieses steuert keinen Druck an. Angenommen das Fahrzeug hat eine hohe Fahrgeschwindigkeit. Der Elektromagnet 67 erhält hierbei keinen Strom, so daß die Feder 73 den Steuerkolben 60 in der in Fig. 2 und 6 gezeigten Grundstellung hält. Der Druckölfluß innerhalb des Drehschieberventils 10, 20 ist nachfolgend wiederum nur an einem der drei zusammenwirkenden Steuernuten- und Bohrungssysteme erläutert. Das von der motorgetriebenen Pumpe 36 in die Zulaufsteuernut 6 geförderte Drucköl kann über die beidseits geöffneten Steuerkanten 6A und 6B abströmen. Das Drucköl fließt z. B. über die im Uhrzeigersinn rechts gelegene Steuernut 24 zu den Fenstern 51, 52, 53 und 57 sowie die Rücklaufbohrungen 11, 12, 13 und 17 in die Bohrung 64 des Steuerkolbens 60. Von dort kann das Öl über die Bohrung 27 und den Innenraum 46 (Fig. 1) zum Behälter 48 abfließen.

Die Stellung der Steuernuten 22 und 24 zu den Fenstern 51, 52, 53 bzw. 54, 55, 56 und 57 ist in der beschriebenen Neutralstellung aus Fig. 8 am deutlichsten zu ersehen. Die Steuernuten 22 und 24 (strichpunktierte Linien) schneiden sämtliche Fenster an. In der Grundstellung des Steuerkolbens 60 (Fig. 6) ist ein Ölrückfluß über sämtliche Fenster und Rücklaufbohrungen sichergestellt. Sobald das Fahrzeug seine Geschwindigkeit verringert, erhält der Elektromagnet 67 Strom, und der Steuerkolben 60 bewegt sich aus der Grundstellung der Fig. 6 in Pfeilrichtung nach rechts, so daß die Ringnuten 61, 62 und 63 nicht mehr den vollen Querschnitt der Rücklaufbohrungen 11, 12, 13 bzw. 14, 15, 16 freigeben. Der Rücklauf erfolgt nunmehr über die mehr oder weniger geöffneten Rücklaufbohrungen.

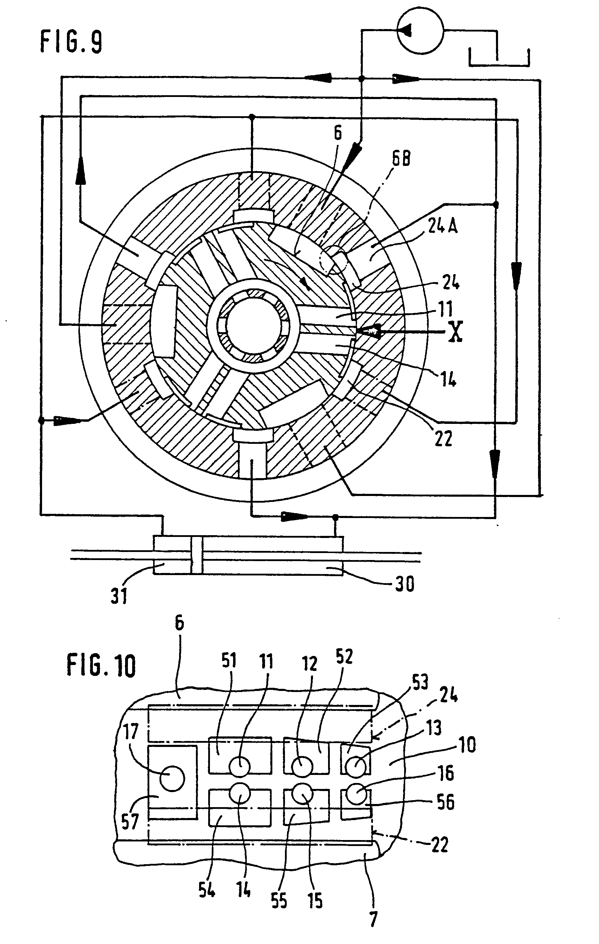

Die Fig. 9 und 10 zeigen das Drehschieberventil in einer Lenkstellung mit dem um einen bestimmten Winkelbetrag gegenüber der Ventilbuchse 20 in Pfeilrichtung verdrehten Drehschieber 10. Die Steuerkante 6B ist weit geöffnet, so daß das über die Zulaufsteuernut 6 herangeführte Drucköl in die Steuernut 24 einströmt und von dort über die Radialbohrung 24A in den Druckraum 30 abfließen kann. Der allmähliche Druckaufbau erfolgt hierbei durch die Abregelung eines Teilstromes über die Fenster 51 und 52 und über die zugehörigen Rücklaufbohrungen 11 bzw. 12. Der abgeregelte Teilstrom kann von der Ringnut 24 über an den Fenstern 51 und 52 noch offene Spalte in die Rücklaufbohrungen 11 und 12 abströmen. Zum Fenster 53 und 57 hat jedoch die Steuernut 24 keine Verbindung mehr. Da bei diesem Abregeln nahezu die gesamte Umfangslänge der flachen Fenster 51 und 52 zur Verfügung steht, kann sich der hohe Druck über eine lange Drosselstrecke abbauen. Es entstehen keine Ausströmgeräusche am Eintritt in die Rücklaufbohrungen 11 und 12.

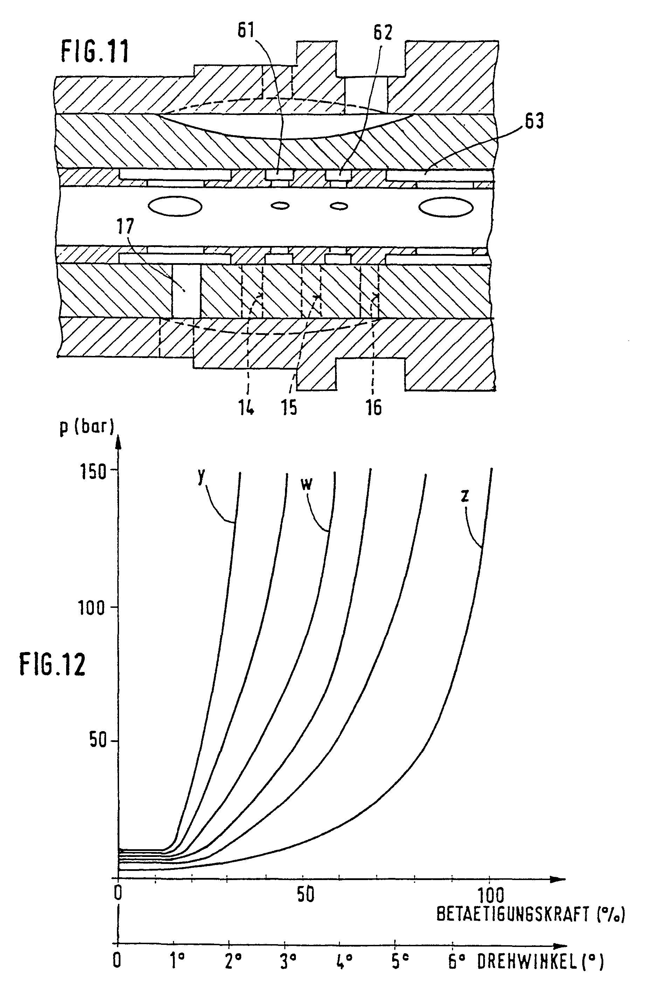

Angenommen das Fahrzeug bewegt sich bei dieser Lenkstellung mit mittlerer Geschwindigkeit, so befindet sich der Steuerkolben 60 in einer Zwischenstellung (nicht gezeichnet), in welcher er über die Ringnuten 61, 62, 63 nur Teilquerschnitte der Rücklaufbohrungen 11, 12, 13 freigibt. Der sich hieraus ergebende augenblickliche Rücklaufquerschnitt erzeugt eine ganz bestimmte Betätigungskraft am Lenkhandrad. Diese Betätigungskraft ist entsprechend der Geschwindigkeit und weiterer Einflußgrößen so abgestimmt, daß sie dem Fahrer eine voll ausreichende Hilfskraftunterstützung bei gleichzeitig gutem Straßenkontakt vermittelt. Der zu diesem Betriebszustand gehörende Druckaufbau entspricht etwa der Kennlinie W in Fig. 12. Das gleichzeitig aus dem anderen Druckraum 31 ausgeschobene Ölvolumen gelangt von der Steuernut 22, welche alle Fenster 54 bis 57 weit überdeckt, zu den Rücklaufbohrungen 14 bis 17 und kann ungehindert zum Behälter 48 abströmen.

Hat das Fahrzeug z. B. beim Einparken nur eine sehr geringe Geschwindigkeit, dann drückt der Elektromagnet 67 den Steuerkolben 60 in seine Endstellung nach Fig. 11. Die Bohrungen 11, 12, 13 sind dann vollkommen abgesperrt. Beim Verdrehen des Drehschiebers 10 erfolgt die Abregelung nur noch über das Fenster 57 und die Rücklaufbohrung 17. Die Fig. 10 zeigt bereits eine Stellung der Steuernut 24 zum Fenster 57, in der kein Öl mehr überströmen kann, die Druckansteuerung ist also bereits beendigt, und im Druckraum 30 herrscht der Höchstdruck. Infolge dieses anfänglich stark verringerten Rücklaufquerschnitts, nur über das Fenster 57 und die Rücklaufbohrung 17, steigt die Hilfskraft im Druckraum 30 steil an, d. h., der Drehschieber 10 muß, um einen hohen Druck anzusteuern, einen nur kleinen Drehwinkel gegenüber der Ventilbuchse 20 verdreht werden. Daher bleibt auch die Betätigungskraft am Lenkhandrad verhältnismäßig klein. Das Drehschieberventil 10, 20 erzeugt hierbei einen Druckanstieg, wie er in Fig. 10 durch die Kennlinie Y dargestellt ist.

In einem weiteren angenommenen Betriebszustand fährt das Fahrzeug mit hoher Geschwindigkeit, bei welcher der Fahrer nur kleinere Lenkkorrekturen ausführt. In diesem Fall erhält der Elektromagnet 67 wiederum keinen Strom, so daß der Steuerkolben 60 in seiner durch die Feder 73 bestimmten Grundstellung links gemäß Fig. 6 gehalten wird. Der Drehschieber 10 wird nur um einen kleinen Drehwinkel in Pfeilrichtung der Fig. 9 verdreht. Dabei schneidet die Steuernut 24 alle Fenster 51, 52, 53 und 57 an, so daß verhältnismäßig große Übertrittsquerschnitte zu den Rücklaufbohrungen 11, 12, 13 bzw. 17 entstehen. Da in der vorerwähnten Grundstellung des Steuerkolbens 60 der gesamte Rücklaufquerschnitt der Rücklaufbohrungen 11, 12, 13 offen ist, steigt der Druck im aktiven Druckraum 30 nur langsam über den Drehwinkel an. Die Betätigungskraft am Lenkhandrad ist daher höher. Die Kennlinie Z in Fig. 12 zeigt hierzu den Verlauf des Druckanstiegs.

Zwischen den Grenzlinien Y und Z bilden sich entsprechend der Stellung des Steuerkolbens 60 und der Verdrehstellung des Drehschieberventils beliebige, auf den jeweiligen Fahrzustand abgestimmte Kennlinien ab. Auf diese Weise erhält man eine variable Ventilcharakteristik. Die spezielle Kontur der einzelnen Fenster, z. B. 51 bis 57, zum Ansteuern des Arbeitsdrucks und die Position der Rücklaufbohrungen, z. B. 11, 12, 13 bzw. 17, in bezug auf den Steuerkolben ist so gewählt, daß sich eine nahezu stufenlose Kennlinienveränderung ergibt.

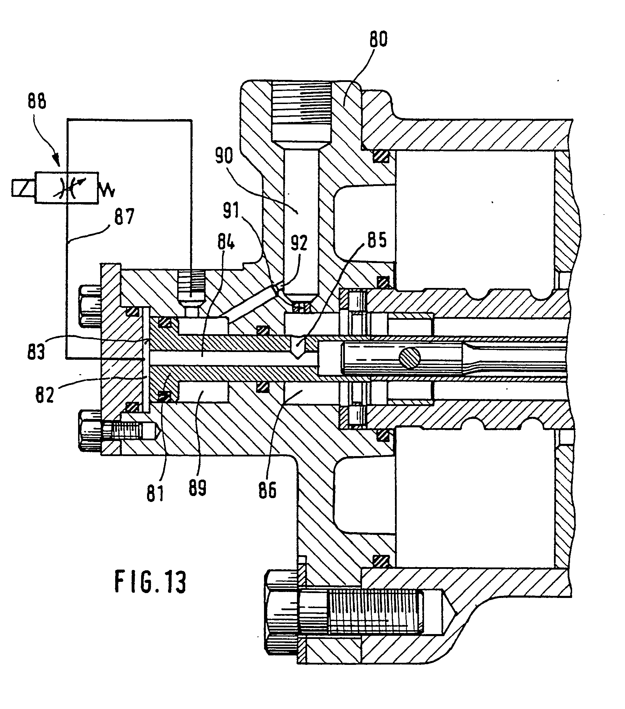

Die Ausführungsform nach Fig. 13 zeigt anstelle eines Elektromagnets 67 einen in einen Gehäusedeckel 80 eingesetzten Kolben 81. Ein Druckraum 82 mit einer beaufschlagbaren Fläche 83 des Kolbens 81 steht über eine Axialbohrung 84 und eine Radialbohrung 85 mit einem den Rücklaufstrom führenden Raum 86 in Verbindung. Der Druckraum 82 ist über eine Rücklaufleitung 87, die ein elektromagnetisches Drosselventil 88 enthält, an eine auf der Rückseite des Kolbens 81 gelegene Kammer 89 angeschlossen. Die Kammer 89 ist über eine Drosselbohrung 92 zu einem Rücklaufkanal 90 entlastet. Die Rücklaufbohrung 90 steht außerdem über eine weitere Drosselbohrung 91 mit dem Raum 86 in Verbindung. Das Drosselventil 88 staut das Rücklauföl in Abhängigkeit von einem Steuersignal mehr oder weniger auf, so daß der auf die Fläche 83 wirkende Druck eine Axialverstellung des Kolbens 81 und über das Rohr 70 auch des Steuerkolbens 60 (Fig. 2) bewirkt. Die Drosselbohrung 91 im Rücklaufkanal 90 sorgt in Verbindung mit der Drosselbohrung 92 dafür, daß sich im Druckraum 82 beim Ansprechen des Drosselventils 88 ein geringer Differenzdruck aufbauen kann.

Bezugszeichen
1 Getriebegehäuse
2 Arbeitskolben
3 Lenkspindel
4 Drehstab
4A verdicktes Ende von 4
4B abgeflachtes Ende von 4
5 Gewindespindel
6 Zulaufsteuernut
6A, 6B Steuerkante
7 Zulaufsteuernut
8 Zulaufsteuernut
9, 9A Bohrungsreihe
10 Drehschieber
11 Rücklaufbohrung
12 Rücklaufbohrung
13 Rücklaufbohrung
14 Rücklaufbohrung
15 Rücklaufbohrung
16 Rücklaufbohrung
17 Rücklaufbohrung
18 Stift
19 Stift
20 Ventilbuchse
21 Steuernut
21A Radialbohrung
22 Steuernut
23 Steuernut
24 Steuernut
25 Steuernut
25A Radialbohrung
26 Steuernut
27 Bohrung für 28
28 Querbolzen
28A Einschnürung von 28
29 Lenksegment
30 Druckraum
31 Druckraum
32 Kugelkette
33 Verzahnung
34 Lenkwelle
35 Axiallager
36 Axiallager
37 Ringnut
38 -
39 -
40 Ringspalt
41 Ringspalt
42 Ringspalt
43 -
44 Rohr
45 Bohrung in 10
46 Innenraum von 5
47 -
48 Behälter
49 Auslaßanschluß
50 Deckel
51 Fenster
52 Fenster
53 Fenster
54 Fenster
55 Fenster
56 Fenster
57 Fenster
58 Steg
59 Ringnut
60 Steuerkolben
61 Ringnut
62 Ringnut
63 Ringnut
64 Bohrung in 60
65 Radialbohrung in 10
66 Gehäuserücklaufnut
67 Elektromagnet
67A Stößel
68 Hülse
69 -
70 Rohr
71, 71A Lappen
72, 72A Lappen
73 Feder
74 Buchse
80 Gehäusedeckel
81 Kolben
82 Druckraum
83 Fläche v. 81
84 Axialbohrung
85 Radialbohrung
86 Raum

87 Rücklaufleitung
88 Drosselventil
89 Kammer
90 Rücklaufbohrung
91 Drosselbohrung
92 Drosselbohrung

## Patentansprüche

1. Drehschieberventil für hydraulische Hilfskraftlenkungen von Kraftfahrzeugen mit folgenden Merkmalen:

Das Drehschieberventil besteht aus einer Ventilbuchse (20), die einen Drehschieber (10) umschließt;

in die Innenfläche der Ventilbuchse (20) und die Außenfläche des Drehschiebers (10) sind miteinander zusammenwirkende, längs verlaufende Steuernuten eingearbeitet, die das Drucköl für einen Arbeitszylinder steuern;

der Drehschieber (10) und die Ventilbuchse (20) sind durch einen Drehstab (4) elastisch miteinander verbunden;

der Drehschieber (10) enthält radial verlaufende, mit einem Behälter verbundene Rücklaufbohrungen, gekennzeichnet durch folgende Merkmale:

Die Rücklaufbohrungen (11, 12, 13 bzw. 14, 15, 16) im Drehschieber (10) sind für jede Drehrichtung getrennt in Längsrichtung hintereinander angeordnet, so daß jeweils zwei nebeneinanderliegende Bohrungsreihen (9 bzw. 9A) entstehen;

jede Bohrungsreihe (9 bzw. 9A) ist einer mit dem Arbeitszylinder (1, 2) verbundenen Steuernut (24 bzw. 22) in der Ventilbüchse (20) zugeordnet, und

ein in einer konzentrischen Bohrung (45) des Drehschiebers (10) geführter Steuerkolben (60) steht zum Verändern des Rücklaufquerschnitts mit einer Verstelleinrichtung (Elektromagnet 67, Kolben 81) in Verbindung, die die Rücklaufbohrungen in Abhängigkeit von mindestens einer Einflußgröße (z. B. Geschwindigkeit) so steuert, daß man variable Betätigungskräfte am Lenkhandrad erhält.

2. Drehschieberventil nach Anspruch 1, gekennzeichnet durch folgende Merkmale:

Als Verstelleinrichtung ist ein Elektromagnet (67) an einem Gehäusedeckel (50) zum Drehstab (4) fluchtend befestigt;

der Elektromagnet (67) steht über ein auf dem Drehstab (4) abgestütztes und die Gewindespindel (5) durchdringendes Rohr (70) mit dem Steuerkolben (60) in Verbindung und

der Steuerkolben (70) stützt sich an einer Feder (73) ab.

3. Drehschieberventil nach Anspruch 1, gekennzeichnet durch folgende Merkmale:

Als Verstelleinrichtung ist in einem Gehäusedeckel (80) ein mit dem Drehstab (4) fluchtender Kolben (81) eingesetzt;

der Kolben (81) steht über ein auf dem Drehstab (4) abgestütztes und eine Gewindespindel (5) durchdringendes Rohr (70) mit dem Steuerkolben (60) in Verbindung;

der Steuerkolben (60) stützt sich an einer Feder (73) ab;

eine druckbeaufschlagbare Fläche (82) des Kolbens (81) ist mit einem das Rücklauföl führenden Raum (86) verbunden, und

in eine Rücklaufleitung (87) hinter der Fläche (82) ist ein elektromagnetisches Drosselventil (88) eingebaut.

4. Drehschieberventil nach Anspruch 1, gekennzeichnet durch folgende Merkmale:

Der Steuerkolben (60) weist eine an einen Behälter (48) angeschlossene Bohrung (64) auf;

in die Außenfläche des Steuerkolbens (60) sind etwa im Abstand der im Drehschieber (10) vorgesehenen radialen Rücklaufbohrungen (11, 12, 13 bzw. 14, 15, 16) mit der Bohrung (64) verbundene Ringnuten (61, 62, 63) eingearbeitet;

die Ringnuten (61, 62, 63) steuern den Öldurchgang von den Rücklaufbohrungen (11, 12, 13 bzw. 14, 15, 16) zu der Bohrung (64) des Steuerkolbens (60), und

anschließend an zwei nebeneinanderliegenden Bohrungsreihen (9 bzw. 9A) liegt mittig zu diesen eine weitere einer langen Ringnut (59) gegenüberliegende Rücklaufbohrung (17), deren Querschnitt als Restquerschnitt stets geöffnet ist.

5. Drehschieberventil nach Anspruch 4, gekennzeichnet durch folgende Merkmale:

die Rücklaufbohrungen (11 bis 16) sind von Fenstern (51 bis 56) umgeben;

die Fenster haben unterschiedliche Breite und Umfangslänge;

ein Teil der Fenster ist mit einer schrägen Außenkontur versehen.

die Rücklaufbohrungen (11, 12, 13 bzw. 14, 15, 16) und die zugehörigen Fenster (51, 52, 53 bzw. 54, 55, 56) sind durch einen längs verlaufenden Steg (58) hydraulisch voneinander getrennt, und

die mittig zu den beiden Bohrungsreihen (9A, 9B) liegende Rücklaufbohrung (17) hat ein Fenster (57), das in beiden Drehrichtungen wirksam ist.

6. Drehschieberventil nach Anspruch 5, dadurch gekennzeichnet, daß das Fenster (57) der stets geöffneten Rücklaufbohrung (17) in Umfangsrichtung am kleinsten ist.

7. Drehschieberventil nach Anspruch 1, dadurch gekennzeichnet, daß in der Grundstellung des Steuerkolbens (60) die steuerbaren Rücklaufbohrungen (11, 12, 13 bzw. 14, 15, 16) geöffnet sind.

8. Drehschieberventil nach Anspruch 1 mit folgenden Merkmalen:

Der Drehstab (4) ist mit einem Stift (18) an die Gewindespindel (5) und mit einem weiteren Stift (19) an die Lenkspindel (3) angeschlossen;

die Lenkspindel (3) und die Gewindespindel (5) sind mit Hilfe eines ein Verdrehspiel zulassenden Bolzens (28) miteinander gekoppelt, gekennzeichnet durch folgende Merkmale:

das Rohr (70) weist an seinen beiden Enden zwei sich gegenüberliegende Lappen (71, 71A bzw. 72, 72A) auf;

der Bolzen (28) hat eine Einschnürung (28A);

der Drehstab (4) ist an seinem dem Steuerkolben (60) zugewandten Ende (4B) abgeflacht;

die Lappen (71, 71A) sind an dem abgeflachten Ende (4B) und der Einschnürung (28A) des Bolzens (28) seitlich vorbeigeführt und stützen sich stirnseitig am Steuerkolben (60) ab, und

die Lappen (72, 72A) liegen im Bereich des verdickten Drehstabendes (4A) seitlich des Stifts (18) und stützen sich an einer Hülse (68) des Elektromagnets (67) ab (Fig. 3, 4).

## Revendications

1. Soupape de distribution rotative pour servodirections hydrauliques de véhicules, dans laquelle:

la soupape comprend une cage de soupape (20) qui entoure un tiroir rotatif (10);

la surface intérieure de la cage (20) et la surface extérieure du tiroir (10) comportent des rainures longitudinales de commande qui coopèrent mutuellement et qui distribuent l'huile hydraulique pour un vérin de travail;

le tiroir (10) et la cage (20) sont reliés élastiquement l'un à l'autre par une barre de torsion (4);

le tiroir (10) contient des trous radiaux de retour, reliés à un réservoir;

caractérisée par les particularités suivantes:

les trous de retour (11, 12, 13; 14, 15, 16) du tiroir (10) sont disposés sur des rangées longitudinales séparées pour chaque sens de rotation, de façon à former deux rangées de trous juxtaposées (9, 9A);

chaque rangée de trous (9, 9A) est associée dans la cage (20) à une rainure de commande (24, 22) reliée au vérin (1, 2);

et un piston de commande (60) coulissant dans un alésage concentrique (45) du tiroir (10) est raccordé, pour modifier la section de passage de retour, à un dispositif de réglage (électro-aimant 67, piston 81) qui commande les trous de retour en fonction d'au moins un paramètre (par exemple la vitesse) de manière à nécessiter des forces d'actionnement variables sur le volant.

2. Soupape de distribution rotative selon la revendication 1, caractérisée par les particularités suivantes:

le dispositif de réglage comporte un électro-aimant (67) fixé à un couvercle de boîtier (50) et situé dans le prolongement de la barre de torsion (4);

l'électro-aimant (67) est relié au piston de commande (60) par un tube (70) s'appuyant sur la barre de torsion (4) et traversant une tige filetée (5); et

le piston de commande (60) est appuyé contre un ressort (73).

3. Soupape de distribution rotative selon la revendication 1, caractérisée par les particularités suivantes:

le dispositif de réglage comporte un piston (81) logé dans un couvercle de boîtier (80) dans le prolongement de la barre de torsion (4);

ledit piston (81) est raccordé au piston de commande (60) par un tube (70) s'appuyant sur la barre de torsion (4) et traversant une tige filetée (5);

le piston de commande (60) est appuyé contre un ressort (73);

une surface hydrauliquement sollicitée (82) du piston (81) est associée à une chambre (86) où passe le retour de l'huile; et

une soupape électromagnétique à étranglement (88) est montée sur une conduite de retour (87) en aval de ladite surface (82).

4. Soupape de distribution rotative selon la revendication 1, caractérisée par les particularités suivantes:

le piston de commande (60) comporte un alésage (64) raccordé à un réservoir (48);

la surface extérieure du piston de commande (60) comporte des rainures annulaires (61, 62, 63) reliées audit alésage (64) et espacées sensiblement de la même manière que les trous de retour radiaux (11, 12, 13; 14, 15, 16) prévus dans le tiroir (10);

lesdites rainures annulaires (61, 62, 63) commandent le passage de l'huile des trous de retour (11, 12, 13; 14, 15, 16) à l'alésage (64) du piston de commmande (60); et

à proximité de deux rangées de trous juxtaposées (9, 9A) et en position médiane par rapport à celles-ci, il est prévu un trou de retour supplémentaire (17) qui se trouve en face d'une longue rainure annulaire (59) et dont la section transversale est ouverte en permanence pour servir de section résiduelle.

5. Soupape de distribution rotative selon la revendication 4, caractérisée par les particularités suivantes:

les trous de retour (11 à 16) sont entourés par des fenêtres (51 à 56);

les fenêtres ont différentes largeurs et différents périmètres;

une partie des fenêtres présente un contour extérieur disposé en biais;

les trous de retour (11, 12, 13; 14, 15, 16) et les fenêtres correspondantes (51, 52, 53; 54, 55, 56) sont séparés hydrauliquement les uns des autres par une portée longitudinale (58); et

le trou de retour (17) situé en position médiane par rapport aux deux rangées de trous (9A, 9B) comporte une fenêtre (57) agissant dans les deux sens de rotation.

6. Soupape de distribution rotative selon la revendication 5, caractérisée en ce que la fenêtre (57) du trou de retour ouvert en permanence (17) est la plus petite en direction circonférentielle.

7. Soupape de distribution rotative selon la revendication 1, caractérisée en ce que les trous de retour commandés (11, 12, 13; 14, 15, 16) sont ouverts dans la position de base du piston de commande (60).

8. Soupape de distribution rotative selon la revendication 1, comportant les particularités suivantes:

la barre de torsion (4) est fixée par un goujon (18) à la tige filetée (5) et par un autre goujon (19) à l'arbre de direction (3);

l'arbre de direction (3) et la tige filetée (5) sont couplées l'un à l'autre à l'aide d'une cheville (28) permettant un jeu de rotation; caractérisée par les particularités suivantes:

le tube (70) comporte à ses deux extrémités deux pattes opposées (71, 71A; 72, 72A);

ladite cheville (28) comporte un rétrécissement (28A);

la barre de torsion (4) est aplatie à son extrémité (4B) située du côté du piston de commande (60);

les pattes (70, 71A) passent latéralement le long de ladite extrémité aplatie (4B) et ledit rétrécissement (28A) de la cheville (28) et elles s'appuient de manière frontale contre le piston de commande (60); et

les pattes (72, 72A) sont disposées latéralement par rapport au goujon (18) dans la zone de l'extrémité épaissie (4A) de la barre de torsion et elles s'appuient sur une douille (68) de l'électroaimant (67) fig 3, 4.

## Claims

1. Rotary slide valve for hydraulic power assisted steering systems of motor vehicles having the following features:

the rotary slide valve comprises a valve bush (20) which surrounds a rotary slide gate (10);

worked into the inner surface of the valve bush (20) and the outer surface of the rotary slide gate (10) are longitudinally extending control grooves which cooperate with one another and control the compressed oil for a working cylinder;

the rotary slide gate (10) and the valve bush (20) are resiliently connected to one another by a torsion bar (4);

the rotary slide gate (10) includes radially extending return bores which are connected to a tank, characterised by the following features:

the return bores (11, 12, 13 and 14, 15, 16) in the rotary slide gate (10) are disposed separately for each direction of rotation longitudinally behind one another so that two adjacent rows of bores (9 and 9A) are produced;

each row of bores (9 or 9A) is allocated to a control groove (24 or 22) in the valve bush (20) connected to the working cylinder (1, 2), and

a control piston (60) guided in a concentric bore (45) of the rotary slide gate (10) is connected for varying the return cross-section to an adjusting device (electromagnet 67, piston 81) which controls the return bores in dependence upon at least one influencing variable (e.g. speed) in such a manner that variable actuating forces are obtained at the steering wheel.

2. Rotary slide valve according to claim 1, characterised by the following features:

by way of an adjusting device, an electromagnet (67) is fastened on a housing lid (50) flush with the torsion bar (4);

the electromagnet (67) is connected to the control piston (60) by means of a pipe (70) supported on the torsion bar (4) and penetrating the threaded spindle (5) and the control piston (70) is supported on a spring (73).

3. Rotary slide valve according to claim 1, characterised by the following features:

by way of an adjusting device, a piston (81) flush with the torsion bar (4) is inserted in a housing lid (80);

the piston (81) is connected to the control piston (60) by means of a pipe (70) supported on the torsion bar (4) and penetrating a threaded spindle (5);

the control piston (60) is supported on a spring (73);

a pressure-loadable surface (82) of the piston (81) is connected to a chamber (86) conveying the return oil, and

an electromagnetic throttle valve (88) is installed in a return line (87) behind the surface (82).

4. Rotary slide valve according to claim 1, characterised by the following features:

the control piston (60) has a bore (64) connected to a tank (48);

worked into the outer surface of the control piston (60) substantially in the spacing of the radial return bores (11, 12, 13 and 14, 15, 16) provided in the rotary slide gate (10) are annular grooves (61, 62, 63) which are connected to the bore (64);

the annular grooves (61, 62, 63) control the passage of oil from the return bores (11, 12, 13 and 14, 15, 16) to the bore (64) of the control piston (60), and

adjoining two adjacent-lying rows of bores (9 and 9A) and centrally to them is a further return bore (17) which lies opposite a long annular groove (59) and whose cross-section is constantly open as a residual cross-section.

5. Rotary slide valve according to claim 4, characterised by the following features:

the return bores (II to 16) are surrounded by windows (51 to 56);

the windows vary in width and perimeter length;

a portion of the windows is provided with an oblique outer contour.

the return bores (11, 12, 13 and 14, 15, 16) and the associated windows (51, 52, 53 and 54, 55, 56) are hydraulically separated from one another by a longitudinal web (58), and

the return bore (17) lying centrally relative to the two rows of bores (9A, 9B) has a window (57) which is effective in both directions of rotation.

6. Rotary slide valve according to claim 5, characterised in that the window (57) of the constantly open return bore (17) is smallest in a peripheral direction.

7. Rotary slide valve according to claim 1, characterised in that the controllable return bores (11, 12, 13 and 14, 15, 16) are open in the normal position of the control piston (60).

8. Rotary slide valve according to claim 1 having the following features:

the torsion bar (4) is connected by a pin (18) to the threaded spindle (5) and by a further pin (19) to the steering shaft (3).

the steering shaft (3) and the threaded spindle (5) are coupled to one another by means of a bolt (28) permitting torsional play, characterised by the following features:

the pipe (70) has at both ends two opposing tabs (71, 71A and 72, 72A);

the bolt (28) has a necked-down portion (28A);

the torsion bar (4) is flattened at its end (4B) facing the control piston (60);

the tabs (71, 71A) are guided laterally past the flattened end (4B) and the necked-down portion (28A) of the bolt (28) and are supported with their faces on the control piston (60), and

the tabs (72, 72A) are located in the region of the thickened torsion bar end (4A) laterally of the pin (18) and are supported on a sleeve (68) of the electromagnet (67) (Figs. 3, 4).

FIG.1

FIG. 2

FIG.3

FIG.4

FIG.5

FIG.6

4

# FIG.7

# FIG.8

FIG.9

FIG.10

FIG.11

FIG.12

p (bar)

BETAETIGUNGSKRAFT (%)

DREHWINKEL (°)

FIG.13